# EUROPÄISCHE PATENTSCHRIFT

(11) **EP 2 409 664 B1**
(45) Veröffentlichungstag und Bekanntmachung des Hinweises auf die Patenterteilung: **30.10.2013**
(21) Anmeldenummer: 10170440.1
(22) Anmeldetag: 22.07.2010
(51) Int. Cl.: A61C 1/00

(54) **Medizinische Behandlungsvorrichtung und Verfahren zur Regelung einer medizinischen Behandlungsvorrichtung**
Medicinal treatment device and method for regulating same
Dispositif de traitement médical et procédé de réglage d'un dispositif de traitement médical

(43) Veröffentlichungstag der Anmeldung: 25.01.2012
(73) Patentinhaber: W & H Dentalwerk Bürmoos GmbH, 5111 Bürmoos (AT)
(72) Erfinder: Pruckner, Christian, 1190, Wien (AT); Sevcik, Roland, 83435, Bad Reichenhall (DE)
(74) Vertreter: Appelt, Christian W.

(56) Entgegenhaltungen:
- EP-A2- 0 394 583
- US-A- 4 168 447
- US-A- 5 198 713
- US-A- 5 477 100
- US-A1- 2007 085 611

## Beschreibung

Die vorliegende Erfindung bezieht sich auf eine medizinische Behandlungsvorrichtung mit einem kapazitiven Sensor und einem Verfahren zur Regelung einer medizinischen Behandlungsvorrichtung mit einem kapazitiven Sensor und insbesondere auf ein elektrisch versorgtes, medizinisches, insbesondere dentalmedizinisches Instrument, insbesondere ein Handstück, das einen kapazitiven Sensor aufweist.

Bei medizinischen, insbesondere dentalmedizinischen, elektrisch versorgten Instrumenten, ist es häufig notwendig, den Betriebszustand ständig zu überwachen, um beispielsweise auf Basis dieser Messungen die Leistung eines elektrischen Antriebs oder eines anderen elektrischen Bauteils zu steuern oder zu regeln. Dies ist für ein medizinisches Instrument wie beispielsweise ein elektrisch betriebenes Zahnsteinentfernungs-Handstück (Scaler-Handstück) sehr wichtig, da diese Instrumente beispielsweise einen elektrischen Schwingungsgenerator (beispielsweise einen Piezo-Motor) aufweisen. Der Piezo-Motor (Schwingungsgenerator mit Piezo-Elementen) arbeitet im Idealfall mit einer Resonanzfrequenz, die für einen optimalen Betrieb durch das angelegte elektrische Signal bereitzustellen ist, wobei die Resonanzfrequenz beispielsweise lastabhängig ist.

In der Patentschrift US 6,976,843 B2 wird eine dentale Behandlungsvorrichtung beschrieben, die es erlaubt, mehrere Handstücke, die mit unterschiedlichen Resonanzfrequenzen arbeiten, mit einem Ultraschallgenerator zu betreiben. Die Anpassung auf die Resonanzfrequenzen erfolgt über passive Elemente wie beispielsweise Kondensatoren, die zusammen mit dem Handstück mit dem Ultraschallgenerator verbunden werden. Die passiven Elemente haben den Effekt, dass die Resonanzfrequenz, die der Ultraschallgenerator für das jeweilige Handstück bereitstellt, entsprechend auf das Handstück angepasst ist.

In der Patentschrift EP 1 191 895 B1 wird eine Kontrollvorrichtung für ein zahnärztliches Ultraschallhandstück beschrieben, welches ausgebildet ist, um eine Phasenverschiebung, die sich zwischen der Spannung und dem gelieferten Strom bei einer Belastung herausstellt, durch eine intrinsische Kapazität des Ultraschallerzeugers elektrisch zu kompensieren. Dazu ist neben dem primären Stromkreis ein sekundärer Stromkreis ausgebildet, der mit dem primären Stromkreis über einen Wandler verbunden ist und auf der Sekundärseite eine variable Induktivität und eine Kapazität aufweist. Wenn das Handstück beispielsweise in Folge von Belastung nicht mit der Resonanzfrequenz arbeitet und das Strom- und Spannungssignal eine Phasenverschiebung aufweist, wird dann auf der Sekundärseite des Wandlers die Induktivität geändert, sodass sich damit ebenfalls die Phase des Stroms auf der Primärseite verschiebt und somit das Handstück wiederum in Resonanz gebracht werden kann.

Während die erste Patentschrift lediglich ein Anpassen der Resonanzfrequenz durch einen oder mehrere passive Elemente erlaubt und somit eine Anpassung auf diskrete Resonanzfrequenzen möglich ist, nutzt die zweite Patentschrift einen Sekundärstromkreis, um zunächst eine Messgröße wie beispielsweise die relative Phasenverschiebung zwischen dem Strom-und Spannungssignal zu erfassen und anschließend durch eine kontinuierliche Variation der Induktivität auf der Sekundärseite die festgestellte Phasenverschiebung zu kompensieren.

Nachteilig an beiden Lösungen ist, dass keine flexible und verlustarme Erfassung des Betriebszustandes und eine darauf basierende Anpassung, um einen resonanten Betrieb zu erreichen, möglich ist. Ein weiterer Nachteil ist, dass die Regelung mit Verlusten verbunden ist, die für viele Anwendungen nicht akzeptabel sind.

US 2007/0085611 A1 offenbart eine medizinische Ultraschallbehandlungsvorrichtung mit einer Regelungsvorrichtung.

US 5 477 100 B offenbart einen elektrischen Schwingungsgenerator.

Es ist daher die Aufgabe der vorliegenden Erfindung, eine verbesserte medizinische Behandlungsvorrichtung und ein verbessertes Verfahren zur Regelung einer medizinischen Behandlungsvorrichtung bereitzustellen, die es insbesondere erlauben, den Betriebszustand der Behandlungsvorrichtung durch möglichst einfache Mittel und möglichst verlustarm zu erfassen und zu regeln.

Diese Aufgabe wird durch eine medizinische Behandlungsvorrichtung mit kapazitivem Sensor nach Anspruch 1 und ein Verfahren zur Regelung einer medizinischen Behandlungsvorrichtung nach Anspruch 12 gelöst.

Gemäß der vorliegenden Erfindung werden entlang des Strompfades zur Versorgung der medizinischen Behandlungsvorrichtung mit einem Strompfadeingang und einem Strompfadausgang Kontaktelektroden derart angeordnet, dass sich ein erster, zweiter und dritter Kondensator herausbildet, wobei der erste und dritte Kondensator seriell zwischen den Strompfadeingang und einem Massepotential geschaltet sind und der zweite Kondensator zwischen den Strompfadeingang und einem Referenzpotential geschaltet ist. Damit ist ein erstes Messsignal zwischen dem ersten und dritten Kondensator und ein zweites Messsignal an dem Ausgang des zweiten Kondensators abgreifbar. Erfindungsgemäß teilen sich der erste und dritte Kondensator eine gemeinsame Kontaktelektrode, die sich zwischen dem Strompfadeingang und dem Strompfadausgang erstreckt. Das elektrische Eingangssignal zur Versorgung der medizinischen Behandlungsvorrichtung ist an dem Strompfadeingang und eine Last der medizinischen Behandlungsvorrichtung ist an den Strompfadausgang anlegbar. Die Last umfasst beispielsweise einen Piezo-Motor oder ähnliche Stromverbraucher.

Der erste Kondensator wird durch eine zweite Kontaktelektrode, die von der ersten Kontaktelektrode durch ein erstes Dielektrikum getrennt ist, und der zweite Kondensator wird durch eine dritte Kontaktelektrode, die von der ersten Kontaktelektrode durch ein zweites Dielektrikum getrennt ist, gebildet. Die zweite Kontaktelektrode weist einen ersten Messsignalausgang zur Abgreifung des ersten (kapazitiven) Messsignals auf und die dritte Kontaktelektrode weist einen zweiten Messsignalausgang zur Abgreifung des zweiten (kapazitiven) Messsignals auf. Schließlich ist eine vierte Kontaktelektrode mit einem Referenzanschluss zur Kopplung an das Massepotential derart ausgebildet, dass die vierte Kontaktelektrode von der zweiten Kontaktelektrode durch ein drittes Dielektrikum getrennt ist.

Damit wird ein kapazitiver Sensor für eine medizinische Behandlungsvorrichtung bereitgestellt, der es beispielsweise erlaubt, gleichzeitig und signalgetreu Strom und Spannung aufzunehmen bzw. zu detektieren, wobei mittels des Sensors auch nur der Strom oder nur die Spannung bestimmt werden können und einer weiteren Verarbeitung zugeführt werden können. Die signalgetreue Detektion bezieht sich dabei beispielsweise auf den zeitlichen Verlauf der Amplitude oder des Phasenverlaufs oder der Spannung oder des Stroms.

Besonders bevorzugte Ausführungsbeispiele weisen ferner eine Auswerteeinheit auf, um das erste und zweite Messsignal zu erfassen und daraus für das elektrische Eingangssignal ein Stromsignal und/oder ein Spannungssignal und/oder ihre relative Phase zueinander zu ermitteln. Bei dem Stromsignal/Spannungssignal handelt es sich beispielsweise um die Amplitude, die Frequenz und/oder die Phasenbeziehung der Stromstärke/Spannung (z.B. die Stromstärke I als Funktion der Amplitude A, der Frequenz ω und der Phase ϕ bzw. analog für die Spannung). Das so ermittelte Strom- und Spannungssignal und die relative Phasenbeziehung können ferner einer Versorgungseinrichtung, die der Energieversorgung der Behandlungsvorrichtung dient, bereitgestellt werden, um dadurch beispielsweise die relative Phasenbeziehung zwischen dem Strom- und Spannungssignal und/oder die Frequenz für das elektrische Eingangssignal zu ändern. Die Änderung kann beispielsweise über ein Steuersignal erfolgen, welches von der Auswerteeinheit ausgegeben und der Versorgungseinrichtung zugeführt wird, so dass dann in Form eines geschlossenen Regelkreises das Strom- und Spannungssignal änderbar ist. Die Versorgungseinrichtung erzeugt beispielsweise das elektrische Eingangssignal und das Steuersignal ist ausgebildet, um die Versorgungseinrichtung zu einer Änderung des elektrischen Eingangssignals zu veranlassen, um beispielsweise eine Phasenverschiebung und/oder Frequenz zu ändern oder zu eliminieren oder um eine Resonanz der medizinischen Behandlungsvorrichtung (resonanten Betrieb) wiederherzustellen. Ein Vorteil der Auswerteeinheit besteht somit darin, dass durch einfache Mittel der Betriebszustand der Behandlungsvorrichtung wunschgemäß (z.B. resonanter Betrieb) einstellbar ist.

Ferner ist bei weiteren Ausführungsbeispielen die Auswerteeinheit ausgebildet, um aus dem ersten und zweiten Messsignal eine Leistungsaufnahme der medizinischen Behandlungsvorrichtung zu ermitteln bzw. über das Steuersignal zu ändern. Das erste und zweite kapazitive Messsignal kann beispielsweise hinsichtlich eines ersten und zweiten Referenzpotentials genommen werden, wobei das erste und zweite Referenzpotential gleich oder auch unterschiedlich voneinander sein können und darüber hinaus gleich oder unterschiedlich zu dem Massepotential sein können. Ein Vorteil der unterschiedlichen Referenzpotentiale ist, dass es an die Signalstärke angepasst werden kann.

Bei weiteren Ausführungsbeispielen weisen das erste, zweite und dritte Dielektrikum unterschiedliche relative Dielektrizitätskonstanten auf. Optional ist es ebenfalls möglich, dass das erste und zweite Dielektrikum eine gemeinsame Schicht bilden und somit eine gleiche Dielektrizitätskonstante aufweisen, sodass auf der gemeinsam gebildeten Schicht auf der einen Seite die erste Kontaktelektrode ausgebildet ist und auf der gegenüberliegenden Seite lateral zueinander versetzt die zweite und dritte Kontaktelektrode ausgebildet sind. Bei weiteren Ausführungsbeispielen können weitere dielektrische Schichten, beispielsweise unterhalb des dritten Dielektrikums bzw. zwischen der ersten und zweiten Kontaktelektrode ausgebildet sein, die ebenfalls unterschiedliche Dielektrizitätskonstanten aufweisen, um beispielsweise Stärkapazitäten zu unterdrücken. Optional ist es ebenfalls möglich, den kapazitiven Sensor der medizinischen Behandlungsvorrichtung durch eine Leiterplatte zu bilden, auf der die erste bis vierte Kontaktelektrode und das erste bis dritte Dielektrikum als Schichten übereinander ausgebildet sind bzw. dass die Leiterplatte selbst eine der dielektrischen Schichten (d.h. erstes bis drittes Dielektrikums) darstellt. Ebenfalls ist eine koaxiale Anordnung möglich, bei der die einzelnen Kontaktelektroden (halb) zylinderförmig mit radial unterschiedlichen Abständen zueinander angeordnet sind und durch dielektrische Schichten voneinander getrennt sind, so dass auch die dielektrischen Schichten zueinander koaxial angeordnet sein können. Vorteile dieser Ausführungsbeispiele bestehen darin, dass hierdurch einfache Mittel (wie Leiterplatten) genutzt werden können und dass die Positionierung (z.B. bei koaxialer Anordnung in einer Versorgungsleitung) flexibel erfolgen kann.

Bei weiteren Ausführungsbeispielen kann der Strompfadeingang und der Strompfadausgang einen Mindestabstand voneinander aufweisen, der beispielsweise mehr als 1 mm, 2 mm oder auch mehr als 10 mm oder mehr als 20 mm oder mehr als 30 mm betragen kann. Diese räumliche Trennung bietet den Vorteil, dass hiermit beispielsweise hochfrequente Oberwellen erfassbar werden, deren Auftreten ein Indiz für einen unerwünschten nicht-resonanten Betrieb ist. Die medizinische Behandlungsvorrichtung (kapazitiver Sensor) weist bei weiteren Ausführungsbeispielen ein Handstück mit einem Piezo-Motor auf, welches beispielsweise für eine dentale Behandlung und insbesondere für eine Zahnsteinentfernung ausgebildet ist. Alternativ ist der kapazitive Sensor in einem Steuergerät für das Handstück mit Piezo-Motor angeordnet. Optional kann der beschriebene kapazitive Sensor ebenfalls in einer Versorgungsleitung zwischen dem Steuergerät und dem Handstück ausgebildet sein.

Besonders bevorzugte Ausführungsbeispiele umfassen ebenfalls ein Verfahren zur Regelung einer Last der beschriebenen medizinischen Behandlungsvorrichtung auf, wobei das Verfahren umfasst: ein Erfassen des ersten kapazitiven Messsignals, ein Erfassen des zweiten kapazitiven Messsignals, ein Ermitteln eines Steuersignals basierend auf dem ersten kapazitiven Messsignal und dem zweiten kapazitiven Messsignal und ein Bereitstellen des Steuersignals einer Versorgungseinheit derart, dass das Steuersignal das elektrische Eingangssignal ändert. In dem Verfahren kann optional das Steuersignal derart bereitgestellt werden, dass die Phasenverschiebung zwischen dem Stromsignal und dem Spannungssignal verringert wird, um einen resonanten Betrieb der Last herzustellen. Ebenso kann in dem Verfahren das Steuersignal ausgebildet sein, um eine Wirkleistung, die von der Last aufgenommen wird, derart zu ändern, dass sich der Wirkungsgrad der Behandlungsvorrichtung erhöht. Somit nutzt das Verfahren beispielsweise die medizinische Behandlungsvorrichtung, wie sie zuvor beschrieben wurde. Auch andere Merkmale, die anhand der Vorrichtung beschrieben wurden, werden bei weiteren Ausführungsbeispielen auch in dem Verfahren genutzt.

Ausführungsbeispiele der vorliegenden Erfindung weisen gegenüber dem Stand der Technik eine Reihe von Vorteilen auf. Vorteile der Erfindung gemäß Anspruch 1 sind beispielsweise, dass der kapazitive Sensor sehr klein und kompakt ist und dass die kapazitive Kopplung, anstelle der induktiven Kopplung aus dem Stand der Technik, die medizinische Behandlungsvorrichtung (z.B. Scaler) nicht belastet. Der Sensor misst beispielsweise direkt dort, wo die Last ankoppelt, wo eine hohe Spannung oder ein hoher Strom anliegt. Weitere Vorteile sind, dass die mit dem kapazitiven Sensor ermittelten Werten verwendet werden können, um beispielsweise durch entsprechende Schaltungen oder Steuervorrichtungen die Impedanz, Wirkleistung, Blindleistung und andere Parameter abzuleiten oder zu berechnet und für eine Steuerung oder Regelung zu verwenden. Die mit dem Sensor ermittelten Messwerte können genutzt werden, um die Leistung elektrisch betriebenen Scaler-Handstücke oder Piezo-Scaler zu steuern und zu regeln und/oder den Resonanzpunkt (oder die Resonanzfrequenz) für das an den Scaler angeschlossene Werkzeug (Scaler-Tip) zu suchen, zu halten oder anzuzeigen.

Die Erfindung wird nachfolgend Bezugnehmend auf die beiliegenden Zeichnungen näher beschrieben, wobei:
- Fig. 1: eine medizinische Behandlungsvorrichtung nach einem Ausführungsbeispiel der vorliegenden Erfindung zeigt;
- Fig. 2a bis 2e: raumartige Darstellungen der medizinischen Behandlungsvorrichtung und weitere Ausführungsbeispiele der vorliegenden Erfindung zeigen;
- Fig. 3a bis 3g: Schaltungsbilder zeigen, wie das erste und zweite kapazitive Messsignal bei Ausführungsbeispielen erfasst werden.
- Fig. 4: eine idealisierte Darstellung einer zu kompensierenden Phasenverschiebung zwischen einem Strommesssignal und einem Spannungsmesssignal zeigt;
- Fig. 5: eine Signalverarbeitung für ein Spannungs- und ein Stromsignal zeigt;
- Fig. 6: eine Signalverarbeitung in Form eines geschlossenen Regelkreises zur Rückkopplung an die Versorgungseinrichtung zeigt;
- Fig. 7: eine Draufsicht auf die medizinische Behandlungsvorrichtung mit unterschiedlichen Einspeisepunkten zeigt; und
- Fig. 8: ein Ausführungsbeispiel einer medizinischen, insbesondere dentalen, Behandlungsvorrichtung mit einem Handgriff zur Zahnsteinentfernung zeigt.

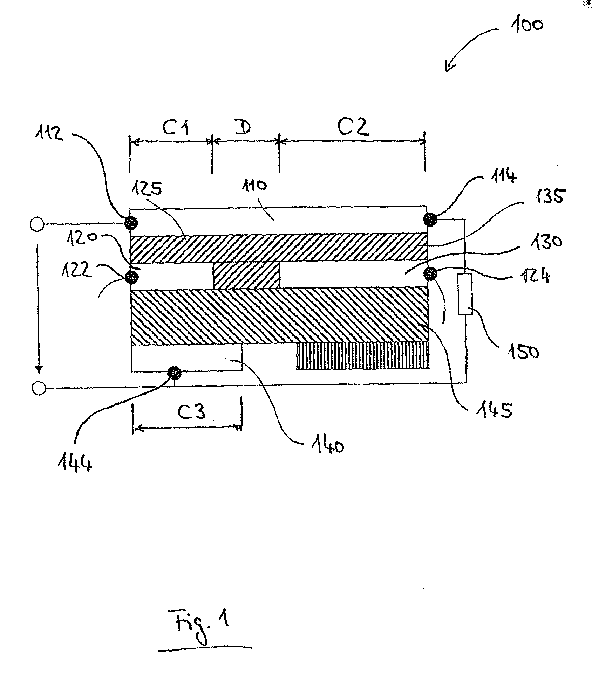

Fig. 1 zeigt eine medizinische, insbesondere dentale, Behandlungsvorrichtung 100 mit einer ersten Kontaktelektrode 110, die sich zwischen einem Strompfadeingang 112 und einem Strompfadausgang 114 erstreckt, wobei ein elektrisches Eingangssignal zur Versorgung der medizinischen Behandlungsvorrichtung an den Strompfadeingang 112 und eine Last 150 der medizinischen Behandlungsvorrichtung an den Strompfadausgang 114 anlegbar ist. Die Behandlungsvorrichtung 100 weist ferner eine zweite Kontaktelektrode 120, die von der ersten Kontaktelektrode 110 durch ein erstes Dielektrikum 125 getrennt ist, und einen ersten Messsignalausgang 122 zur Abgreifung eines ersten kapazitiven Messsignals, auf. Ferner ist eine dritte Kontaktelektrode 130, die von der ersten Kontaktelektrode 110 durch ein zweites Dielektrikum 135 getrennt ist und einen zweiten Messsignalausgang 124 zur Abgreifung eines zweiten kapazitiven Messsignals aufweist, ausgebildet. Eine vierte Kontaktelektrode 140 ist von der zweiten Kontaktelektrode 120 durch ein drittes Dielektrikum 145 getrennt und weist einen Referenzanschluss 144 zur Kopplung an ein Massepotential auf.

Bei dem in der Fig. 1 gezeigten Ausführungsbeispiel bilden das erste und dritte Dielektrikum 125, 135 eine gemeinsame dielektrische Schicht, die im Folgenden auch als erste dielektrische Schicht 135 bezeichnet wird.

Der Bereich, in welchem die erste Kontaktelektrode 110 und die zweite Kontaktelektrode 120 gegenüberliegend der ersten dielektrische Schicht 135 angeordnet sind, bildet den ersten Kondensatorbereich C1 und lateral dazu versetzt wird ein zweiter Kondensatorbereich C2 durch jenen Bereich definiert, in welchem sich die dritte Kontaktelektrode 130 mit der ersten Kontaktelektrode 110 auf gegenüberliegenden Seiten der ersten dielektrischen Schicht 135 angeordnet sind. Schließlich wird der dritte Kondensatorbereich C3 durch die laterale Ausdehnung der vierten Kontaktelektrode 140 gebildet, die der zweiten Kontaktelektrode 120 von dem dritten Dielektrikum 145 gegenüberliegt. Der erste und zweite Kondensatorbereich C1 und C2 sind dabei beispielsweise durch einen Bereich D lateral voneinander getrennt. Die erste bis vierte Kontaktelektrode als auch das erste bis dritte Dielektrikum können dabei wie in der Fig. 1 gezeigt, schichtförmig ausgebildet sein. Alternativ kann auch koaxiale Anordnung der Kontaktelektroden 110, 120, 130, 140 und der dielektrischen Schichten gewählt. Zum Beispiel könnte in der koaxialen Anordnung die erste Kontaktelektrode 110 eine zentrale Leitung bilden, um die herum die anderen Schichten angeordnet sind. In diesem Fall wäre die Fig. 1 eine radiale Schnittdarstellung, wobei der Radius r=0 bei der Kontaktschicht 110 liegen würde. Ebenso möglich ist auch, dass die vierte Kontaktelektrode 140 die zentrale Leitung bilden, d.h. r=0 wäre dann bei der vierten Kontaktelektrode 140.

In der Seitenansicht der Fig. 1 sind somit alle gestreiften Teile aus elektrisch isolierendem Material, wobei beispielsweise Keramik-, Kunststoffplatten, Prints oder ähnliche Materialien verwendet werden können. Die nicht gestreiften Elemente sind beispielsweise aus elektrisch leitfähigem Material mit guter Leitfähigkeit wie beispielsweise durch Kupfer oder auch durch Halbleiterplatten gebildet. Am zweiten Messsignalausgang 124 kann beispielsweise als zweites kapazitives Messsignal ein Strom über das elektrische Feld gemessen werden und am ersten Messsignalausgang 122 kann als erstes kapazitives Messsignal eine Spannung über eine elektrische Feldstärke gemessen werden. Zwischen dem Strompfadausgang 114 und dem Referenzanschluss 144 kann beispielsweise eine Last 150 geschaltet sein, wobei die Last beispielsweise einen Piezo-Motor, einen Piezo-Schwinger oder andere Behandlungskomponenten umfassen kann. Zwischen dem Strompfadeingang 112 und dem Referenzanschluss 144 kann beispielsweise eine Versorgungseinrichtung (Strom- oder Spannungsquelle) geschaltet werden.

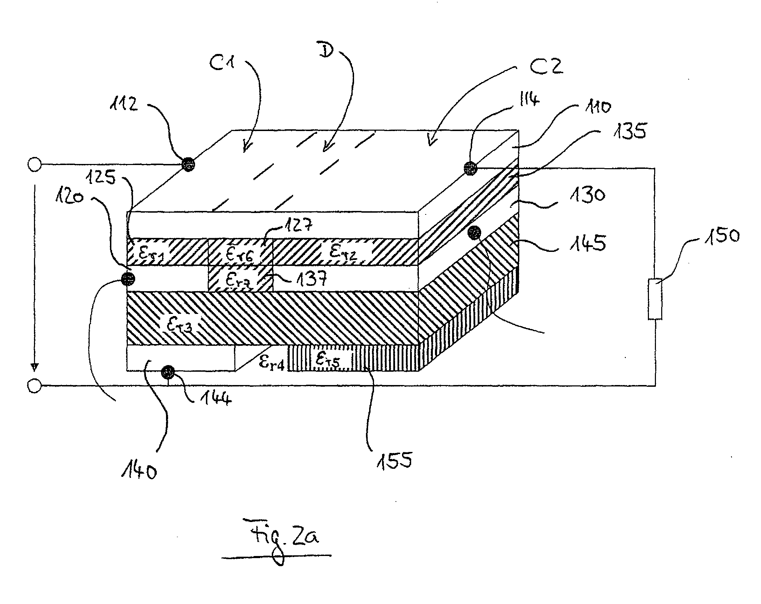

Anhand der Figuren 2a bis 2e werden nun diverse Ausführungsbeispiele der vorliegenden Erfindung näher erläutert.

Fig. 2a zeigt eine Raumansicht einer möglichen schichtförmigen Ausgestaltung der Behandlungsvorrichtung, welche sich von der in der Schnittdarstellung der Fig. 1 gezeigten Ausführungsbeispiel lediglich dadurch unterscheidet, dass zwischen dem ersten Dielektrikum 125 und dem zweiten Dielektrikum 135 ein Zwischendielektrikum 127 ausgebildet ist. Zwischen der zweiten Kontaktelektrode 120 und der dritten Kontaktelektrode 130 ist wie auch in der Fig. 1 eine weitere dielektrische Schicht 137 ausgebildet. Schließlich ist eine fünfte dielektrische Schicht 155 auf der der dritten Kontaktelektrode 130 gegenüberliegenden Seite der dritten dielektrischen Schicht 145 ausgebildet and zwischen der vierten Kontaktelektrode 140 und der fünften dielektrischen Schicht 155 ist ein dielektrisches Interface (z.B. aus Luft) ausgebildet.

Alle dielektrische Schichten können unterschiedliche relative Dielektrizitätskonstanten aufweisen, so dass das erste Dielektrikum 125 eine erste relative Dielektrizitätskonstante εᵣ₁, das zweite Dielektrikum 135 eine zweite relative Dielektrizitätskonstante εᵣ₂, das dritte Dielektrikum 145 eine dritte relative Dielektrizitätskonstante εᵣ₃, das dielektrische Interface eine vierte relative Dielektrizitätskonstante εᵣ₄, die fünfte dielektrische Schicht 155 eine fünfte relative Dielektrizitätskonstante εᵣ₅, das Zwischendielektrikum 127 eine sechste relative Dielektrizitätskonstante εᵣ₆ und die weitere dielektrisch Schicht 137 eine siebte relative Dielektrizitätskonstante εᵣ₇ aufweisen. Bei weiteren Ausführungsbeispielen werden die genannten Dielektrizitätskonstanten (εᵣ₁, εᵣ₂, εᵣ₃, εᵣ₄, εᵣ₅, εᵣ₆ εᵣ₇) gezielt unterschiedliche gewählt oder einige von ihnen werden gleich gewählt (z.B. durch Wahl eines gleichen Materials). Die fünfte relative Dielektrizitätskonstante εᵣ₅ kann beispielsweise ausgebildet sein, um Störkapazitäten zu einem darunter liegenden Substrat (das ebenfalls die vierte relativen Dielektrizitätskonstante εᵣ₄ aufweisen kann) oder zu weiteren Bauelemente zu vermeiden.

Die erste Kapazität C1 im ersten Kondensatorbereich und die zweite Kapazität C2 im zweiten Kondensatorbereich unterscheiden sich insbesondere voneinander, wenn die entsprechende erste Kondensatorfläche und die zweite Kondensatorfläche sich voneinander unterscheiden, aber auch wenn die relativen Dielektrizitätskonstanten (εᵣ₁, εᵣ₂) oder aber die Schichtdicken der dielektrischen Schichten 125, 135 unterschiedlich gewählt wurden.

Die Last 150 ist wiederum zwischen dem Strompfadausgang 114 und dem Referenzanschluss 144 geschaltet. Ebenso ist die Versorgungsquelle zwischen den Strompfadeingang 112 und dem Referenzanschluss 144 geschaltet (wie durch den Pfeil angedeutet). Bei weiteren Ausführungsbeispielen ist es ebenfalls möglich, den Strompfadeingang 112 und den Strompfadausgang 114 an anderen als den gezeigten Positionen entlang der ersten Kontaktelektrode 110 auszubilden. Insbesondere können der Strompfadeingang und/oder der Strompfadausgang 114 ebenfalls in dem Bereich D ausgebildet sein. Ebenfalls können sie einen Mindestabstand voneinander aufweisen.

Die Materialwerte und die geometrischen Abmessungen können beispielsweise derart gewählt werden, dass die Kapazitätswerte für die erste Kapazität C1, die zweite Kapazität C2 und die dritte Kapazität C3 in Pico- und Nanofaradbereich liegen. Dafür können neben den entsprechend gewählten Materialien auch die geometrischen Abmessungen entsprechend variiert werden, wobei neben den Schichtdicken der einzelnen Schichten (insbesondere der dielektrischen Schichten), vor allem die lateralen Abmessungen der Kontaktelektroden (z.B. Flächeninhalte der Kondensatorflächen) die Kapazität der Kondensatoren beeinflusst.

Ferner können die gewählten Kapazitätswerte davon abhängig sein, ob der kapazitive Sensor in der Versorgungseinheit und/oder in einem Handstück eingesetzt werden soll oder ob eine getrennte Messwerterfassung durchgeführt wird. Beispielsweise kann zur Messung einer Spannung innerhalb der Versorgungseinheit die geometrische Abmessung (z.B. Kondensatorbereich C1) 30 mm x 22 mm x 0,7 mm und Kapazitätswerte von: C1=C3 ∼ 160 pF; C13 ∼ 80 pF betragen. Alle Werte hier sind gerundete Werte, so dass Abweichungen von ±10% oder ±50% möglich sind. Für eine Strommessung innerhalb einer Versorgungseinheit können beispielsweise die geometrischen Abmessungen (z.B. für den Kondensatorbereich C2) 30 mm x 20 mm x 0,3 mm und ein Kapazitätswert von C2 ∼ 160 pF genutzt werden.

Bei einer kapazitiven Messung innerhalb eines Handstücke können beispielsweise für die Spannaungsmessung die geometrischen Abmessungen von 3 mm x 2,2 mm x 0,7 mm und die Kapazitätswerte: C1=C3 ∼ 16 pF; C13 ∼ 8 pF genutzt werden. Für eine Strommessung durch den kapazitiven Sensor innerhalb eines Handstückes können beispielsweise die geometrischen Abmessungen von 3,0 mm x 2,0 mm x 0,3 mm und ein Kapazitätswert C2 ∼ 16 pF genutzt werden.

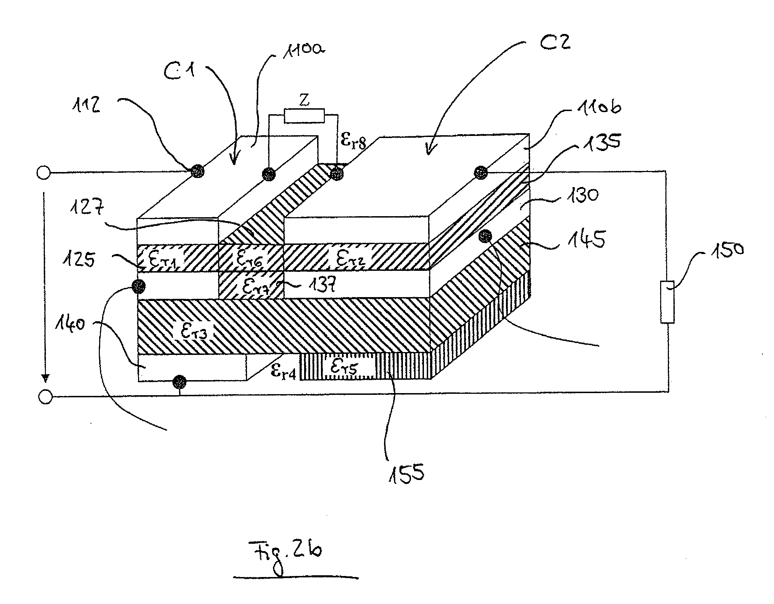

Fig. 2b zeigt eine weitere Raumansicht für ein weiteres Ausführungsbeispiel, welches sich von dem in der Fig. 2a gezeigten Ausführungsbeispiel dadurch unterscheidet, dass die erste Kontaktelektrode 110 einen ersten Teil 110a und einen zweiten Teil 110b aufweist, wobei der erste Teil 110a und der zweite Teil 110b über eine Impedanz Z miteinander elektrisch gekoppelt sind. Außerdem ist zwischen dem ersten Teil 110a und dem zweiten Teil 110b der ersten Kontaktelektrode 110 ein dielektrisches Medium mit einer achten relativen Dielektrizitätskonstante εᵣ₈ ausgebildet, welches beispielsweise ein Luftinterface darstellen kann. Alle weiteren Schichten sind wie auch bei dem Ausführungsbeispiel in der Fig. 2a ausgebildet, sodass auf eine erneute Beschreibung an dieser Stelle verzichtet werden kann.

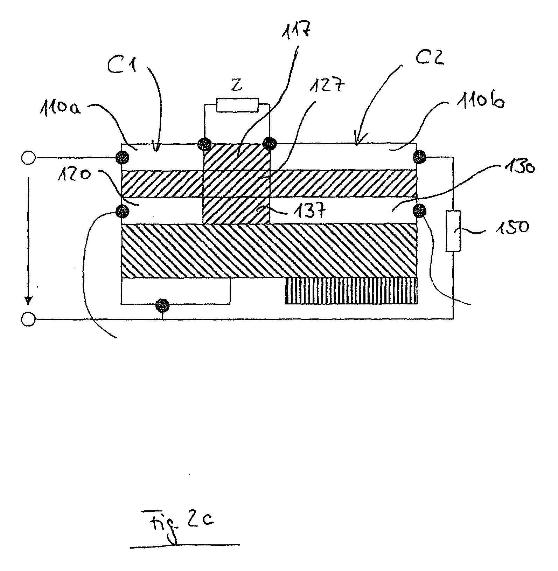

Fig. 2c zeigt ein weiteres Ausführungsbeispiel in einer Schnittdarstellung entlang einer Schnittebene, wie sie beispielsweise auch in der Fig. 1 gewählt wurde (parallel zum Strompfad). Wie auch bei dem Ausführungsbeispiel, welches in der Fig. 2b gezeigt ist, weist das Ausführungsbeispiel der Fig. 2c die erste Kontaktelektrode 110 einen ersten Teil 110a und einen zweiten Teil 110b auf, sodass der erste Teil 110a mit der zweiten Kontaktelektrode 120, die durch das erste Dielektrikum 125 getrennt sind, die erste Kapazität C1 bildet, und bei dem die zweite Kapazität C2 durch den zweiten Teil 110b und der dritten Kontaktelektrode 130, die durch das zweite Dielektrikum 135 elektrisch voneinander getrennt sind, gebildet wird. Ebenso wie bei dem Ausführungsbeispiel der Fig. 2b ist der erste und zweite Teil 110a, 110b der ersten Kontaktelektrode 110 durch eine Impedanz Z elektrisch miteinander verbunden. Bei diesem Ausführungsbeispiel ist allerdings zwischen dem ersten Teil 110a und dem zweiten Teil 110b eine zusätzliche dielektrische Schicht 117 ausgebildet, welche beispielsweise eine achte relative Dielektrizitätskonstante εᵣ₈ aufweist. Somit sind bei dem in der Fig. 2c gezeigten Ausführungsbeispiel die zusätzliche dielektrische Schicht 117, das Zwischendielektrikum 127 und die weitere dielektrische Schicht 137 schichtförmig übereinander angeordnet sind. Die Impedanz Z, die in den Figuren 2b und 2c gezeigt ist, kann beispielsweise eine Impedanz einer elektrischen Leitung sein, die die beiden Kontaktelektroden miteinander verbindet oder kann ganz bewusst ein passives Bauelement (ein Kapazität und/oder eine Induktivität) darstellen, welches einen vorbestimmten Wert für die Impedanz aufweist, der wiederum bei der Erfassung der Messsignale und der anschließenden Regelung (z.B. der relativen Phase) berücksichtigt wird. Bei Ausführungsbeispielen wird der Wert der Impedanz Z beispielsweise gewählt, um das Eingangssignal gezielt zu ändern. Damit kann beispielsweise eine Grobabstimmung bereitgestellt werden, so dass die Regelung dann die Feinabstimmung übernimmt.

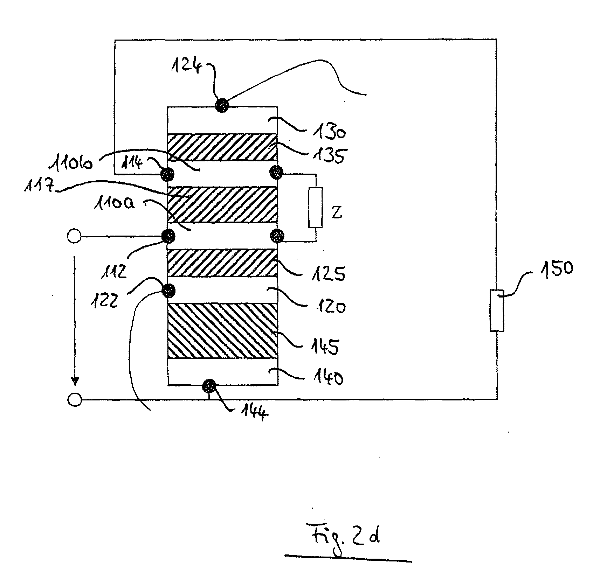

Die Schichtanordnung, so wie sie in den Fig. 1 bis 2c gezeigt sind, stellen lediglich Beispiele dar und die Elemente/Schichten können relativ zueinander auch anders angeordnet werden. Fig. 2d zeigt ein weiteres Ausführungsbeispiel, bei dem alle Schichten als ein Schichtstapel übereinander angeordnet sind. Bei dem gezeigten Ausführungsbeispiel ist somit die vierte Kontaktelektrode 140 als unterste Schicht ausgebildet, auf der das dritte Dielektrikum 145 und anschließend die zweite Kontaktelektrode 120 ausgebildet sind. An der zweiten Kontaktelektrode 120 ist wiederum der erste Messsignalausgang 122 ausgebildet. Auf die zweite Kontaktelektrode 120 ist anschließend das erste Dielektrikum 125 ausgebildet, auf welches wiederum der erste Teil 110a der ersten Kontaktelektrode 110 ausgebildet ist. Der erste Teil 110a weist den Strompfadeingang 112 auf, der beispielsweise mit einer Versorgungsquelle verbunden ist. Auf dem ersten Teil 110a der ersten Kontaktelektrode 110 sind die zusätzliche dielektrische Schicht 117 und daran anschließend der zweite Teil 110b der ersten Kontaktelektrode 110 ausgebildet.

Somit sind ähnlich wie in der Fig. 2c der erste und zweite Teil 11a und 110b der ersten Kontaktelektrode 110 durch die zusätzliche dielektrische Schicht 117 elektrisch voneinander getrennt, wobei jedoch die Schichten nicht, wie in der Fig. 2c gezeigt, nebeneinander angeordnet sind, sondern als ein Schichtstapel übereinander. Wie auch bei der Fig. 2c und der Fig. 2b sind der erste Teil und der zweite Teil 110a, 110b über eine Impedanz Z elektrisch miteinander verbunden. Auf den zweiten Teil 110b ist dann anschließend das zweite Dielektrikum 135 ausgebildet, und schließlich als letzte Schicht in dem Schichtstapel der Fig. 2d ist die dritte Kontaktelektrode 130 angeordnet. Die dritte Kontaktelektrode 30 weist dann wiederum den zweiten Messsignalausgang 124 auf, von welchem das zweite Messsignal abgreifbar ist, und der in diesem Ausführungsbeispiel nicht im Randbereich angeordnet ist, sondern die dritte Kontaktschicht 130 im Wesentlichen mittig kontaktiert.

Wie in der Fig. 2d gezeigt, können dabei die Schichten in dem Schichtstapel alle eine gleiche laterale Ausdehnung (Fläche) aufweisen. Es kann aber auch eine pyramiden- oder kegelförmige Anordnung gewählt werden, bei der beispielsweise einige der Kontaktelektroden 110 bis 140 flächenmäßig unterschiedlich stark ausgebildet sind, sodass die Kapazitätswerte ganz gezielt zwischen den einzelnen Kontaktelektroden: wählbar sind. Die Last 150 ist wie auch bei den anderen Ausführungsbeispielen zwischen dem Strompfadausgang 114 an den zweiten Teil 110b der ersten Kontaktelektrode 110 und den Referenzanschluss 144, der mit der vierten Kontaktelektrode verbunden ist, elektrisch geschaltet.

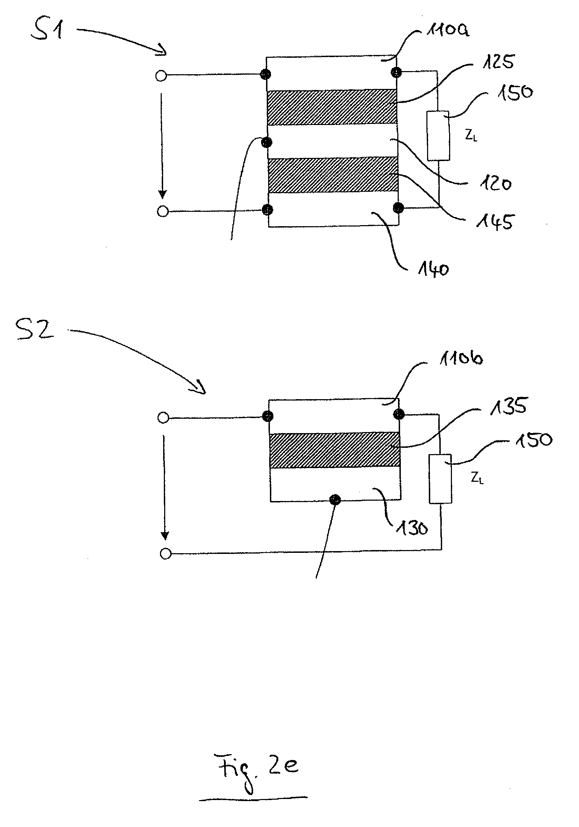

Fig. 2e zeigt ein Ausführungsbeispiel bei dem die Schichtstruktur mit dem ersten Teil 110a der ersten Kontaktelektrode 110, dem ersten Dielektrikum 125, der zweiten Kontaktelektrode 120, dem dritten Dielektrikum 145 und der vierten Kontaktelektrode 140 eine erste Sensoreinheit S1 bilden. Eine zweite Sensoreinheit S2 wird dann durch den zweiten Teil 110b der ersten Kontaktelektrode 110, dem zweiten Dielektrikum 135 und der dritten Kontaktelektrode 130 gebildet, wobei alle Kontaktelektroden und dielektrischen Schichten schichtförmig übereinander angeordnet sind, wie es beispielsweise in den zuvor gezeigten Ausführungsbeispielen dargestellt ist. Die beiden Sensoren S1 und S2 erfassen bei diesem Ausführungsbeispiel raumartig voneinander getrennt das erste und zweite Messsignal. Beispielsweise kann einer der beiden Sensoren S1, S2 in dem Handstück der Behandlungsvorrichtung oder der Verbindungsleitung ausgebildet sein, währenddessen der andere der beiden Sensoren S1 S2 entsprechend entweder in der Verbindungsleitung oder in der Versorgungseinheit angeordnet ist. Ausführungsbeispiele umfassen somit die folgenden Möglichkeiten. Die erste Sensoreinheit S1 ist in dem Handstück ausgebildet, während die zweite Sensoreinheit S2 in der Verbindungsleitung oder in der Versorgungseinheit ausgebildet ist. Bei einer weiteren Ausführungsform ist die erste Sensoreinheit S1 in der Verbindungsleitung ausgebildet, während die zweite Sensoreinheit S2 in dem Handstück oder in der Versorgungseinheit ausgebildet ist. Bei einer weiteren Ausführungsform ist die erste Sensoreinheit S1 in der Versorgungseinheit ausgebildet, während die zweite Sensoreinheit S2 in dem Handstück oder in der Verbindungsleitung ausgebildet ist. Somit umfassen Ausführungsbeispiele auch die Fälle, dass die erste und zweite Sensoreinheit S1, S2 beide zusammen auf der Primärseite oder beide zusammen auf der Sekundärseite ausgebildet sind. Bei weiteren Ausführungsbeispielen ist die erste Sensoreinheit S1 auf der Primärseite und die zweite Sensoreinheit S2 auf der Sekundärseite ausgebildet. Umgekehrt kann ebenfalls die zweite Sensoreinheit S2 auf der Primärseite und die erste Sensoreinheil S1 auf der Sekundärseite ausgebildet sein. Außerdem können bei weiteren Ausführungsbeispielen die erste und zweite Sensoreinheit S1, S2 auch zusammen in dem Handstück oder zusammen in der Versorgungseinheit oder zusammen der Verbindungsleitung ausgebildet sein.

Das Ausführungsbeispiel der Fig. 2e stellt somit den Fall dar, dass die Region D, wie sie in der Fig. 1 oder Fig. 2b gezeigt ist, entsprechend groß gewählt ist, sodass die erste Kapazität C1 und die zweite Kapazität C2 räumlich voneinander getrennt sind. Alternativ ist in dem Bereich D (siehe z.B. Fig. 2a) die gezeigte Vorrichtung durchtrennt und beide Teile wurden räumlich voneinander separiert und elektrisch kontaktiert.

Die elektrische Verbindung der Last 150 erfolgt dabei ebenfalls wie in den zuvor gezeigten Ausführungsbeispielen, indem die Last 150 einerseits zwischen dem ersten Teil 110a und der vierten Kontaktelektrode 140 geschaltet ist und gleichzeitig den zweiten Teil 110b der ersten Kontaktelektrode 110 kontaktiert.

Alle Schichtanordnungen, wie sie in den Figuren 2a bis 2e gezeigt sind, können in einem Herstellungsverfahren unter Nutzung der Dünnschichttechnologie nacheinander abgeschieden werden.

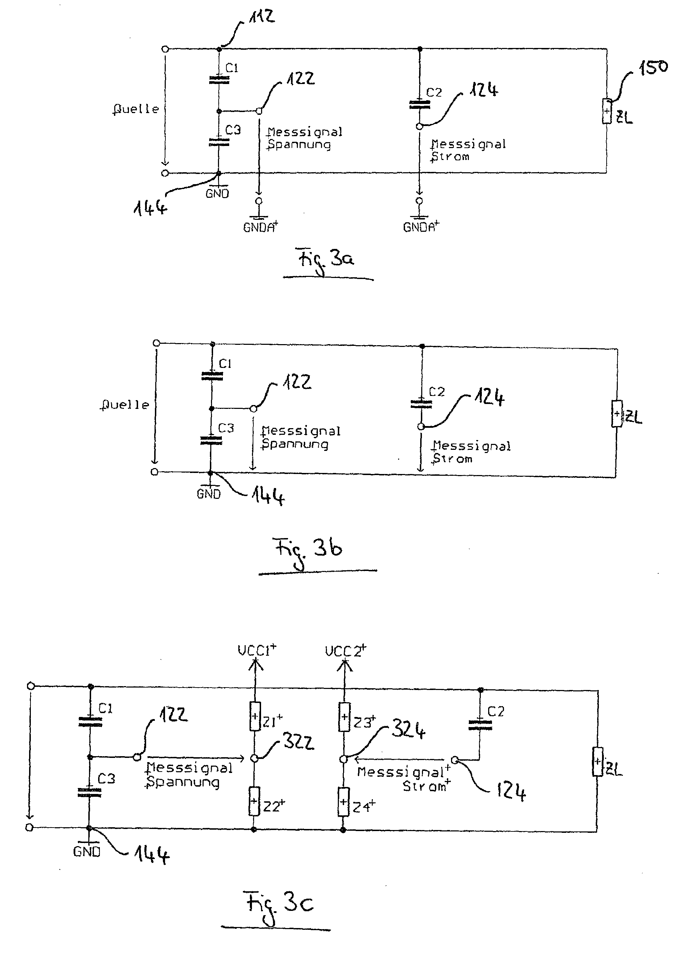

Die Fig. 3a bis 3c zeigen mögliche Schaltbilder zur Erfassung des ersten und zweiten Messsignals.

Fig. 3a zeigt eine erste Schaltungsmöglichkeit bei der der erste Kondensator C1 und der dritte Kondensator C3 seriell zwischen dem Strompfadeingang 112 und dem Referenzanschluss 144 geschaltet sind. Zwischen dem ersten Kondensator C1 und dem dritten Kondensator C3 ist der erste Messsignalausgang 122 geschaltet. Der zweite Kondensator C2 ist zwischen dem Strompfadeingang 112 (bzw. dem Strompfadausgang 114) und einem zweiten Messsignalausgang 124 geschaltet. Die Last 150 weist einen Ohmschen Widerstand RL oder eine Impedanz ZL auf und ist ebenfalls zwischen dem Strompfadeingang 112 und dem Referenzanschluss 144 geschaltet. Das erste Messsignal ist zwischen dem ersten Messsignalausgang 122 und einem weiteren Referenzpotential GNDA und das zweite Messsignal ist zwischen dem zweiten Messsignalausgang 124 und dem weiteren Referenzpotential GNDA abgreifbar. Somit ist bei dem Ausführungsbeispiel, wie es in der Fig. 3A gezeigt ist, das erste und zweite Messsignal auf ein gemeinsames Referenzpotential bezogen, welches gleich oder unterschiedlich zu dem Massepotential GND ist. Beispielsweise kann das erste Messsignal zur Spannungsmessung und das zweite Messsignal zur Strommessung genutzt werden.

Die Fig. 3b zeigt eine alternative Schaltungsanordnung, bei der das weitere Referenzpotential GND A gleich dem Massepotential GND ist, sodass das erste Messsignal zwischen dem ersten Messsignalausgang und dem Referenzanschluss 144 und das zweite Messsignal zwischen dem zweiten Messsignalausgang 124 und dem Referenzanschluss 144 abgreifbar ist.

Fig. 3c zeigt ein weiteres Ausführungsbeispiel bei dem zwischen einer ersten Vergleichsspannung VCC1 und dem Referenzanschluss 144 seriell eine erste Impedanz Z1 und eine zweite Impedanz Z2 geschaltet sind und außerdem zwischen einer zweiten Vergleichsspannung VCC2 und dem Referenzanschluss 144 eine dritte Impedanz Z3 und eine vierte Impedanz Z4 seriell geschaltet sind. Bei dem in der Fig. 3C gezeigten Ausführungsbeispiel wird das erste Messsignal zwischen dem ersten Messsignalausgang 122 und einem ersten Referenzpunkt 322 zwischen der ersten Impedanz Z1 und der zweiten Impedanz Z2 gemessen. Das zweite Messsignal wird zwischen dem zweiten Messsignalausgang 124 und einem zweiten Referenzpunkt 324 zwischen der dritten Impedanz Z3 und der vierten Impedanz Z4 gemessen. Die erste bis vierte Impedanz Z1 bis Z4 können beispielsweise einfache Ohmsche Widerstände sein oder auch weitere passive Bauelemente wie beispielsweise Kondensatoren und/oder Induktivitäten aufweisen. Ebenso ist es möglich, dass die erste Vergleichsspannung VCC1 und die zweite Vergleichsspannung VCC2 unterschiedlich sind bzw. den gleichen Spannungswert aufweisen können. Die erste bis vierte Impedanz Z1 bis Z4 stellen somit weitere Bezugspunkte für die Strom- oder Spannungsmessung dar, die insbesondere eine exaktere Signalaufbereitung ermöglichen. Das erste Messsignal kann wiederum eine Spannungsmessung umfassen und das zweite Messsignal eine Strommessung.

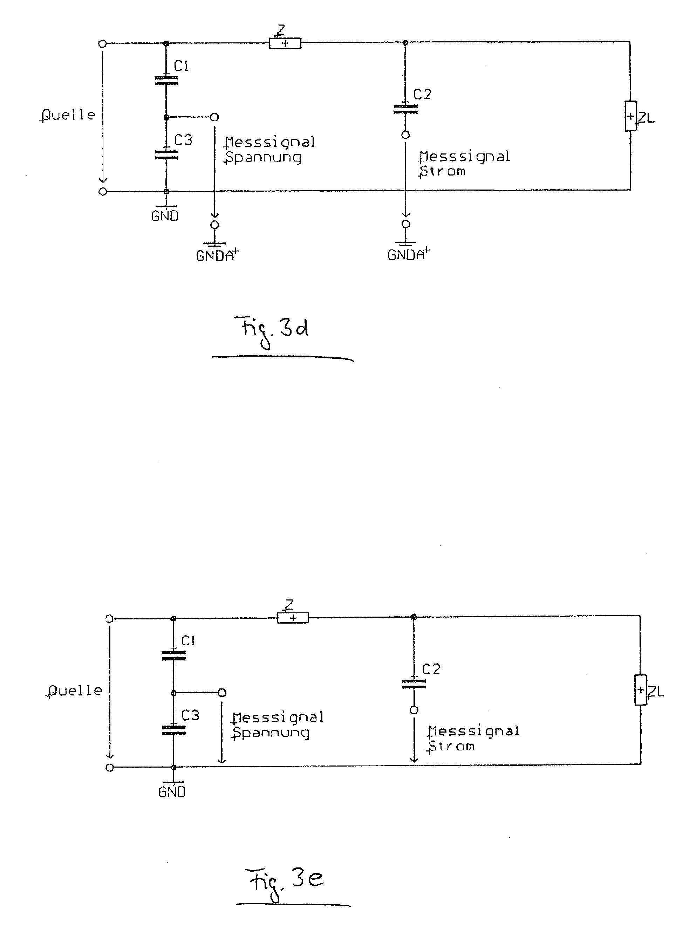

Fig. 3d zeigt eine vierte Schaltungsmöglichkeit, die sich von der ersten Schaltungsmöglichkeit (siehe Fig. 3a) dadurch unterscheidet, dass die elektrische Verbindung zwischen dem ersten Kondensator C1 und dem zweiten Kondensator C2 eine Impedanz Z aufweist und somit dem Fall entspricht, wie er beispielsweise in den Fig. 2b, 2c, 2d gezeigt ist. Alle weiteren Bestandteile der vierten Schaltungsmöglichkeiten entsprechen der ersten Schaltungsmöglichkeit der Fig. 3a, sodass auf eine erneute Beschreibung hier verzichtet werden kann.

Fig. 3e zeigt eine fünfte Schaltungsmöglichkeit, die sich von der zweiten Schaltungsmöglichkeit (siehe Fig. 3b) wiederum dadurch unterscheidet, dass zwischen dem ersten Kondensator C1 und dem zweiten Kondensator C2 die Impedanz Z ausgebildet ist (so wie auch in der Fig. 3d).

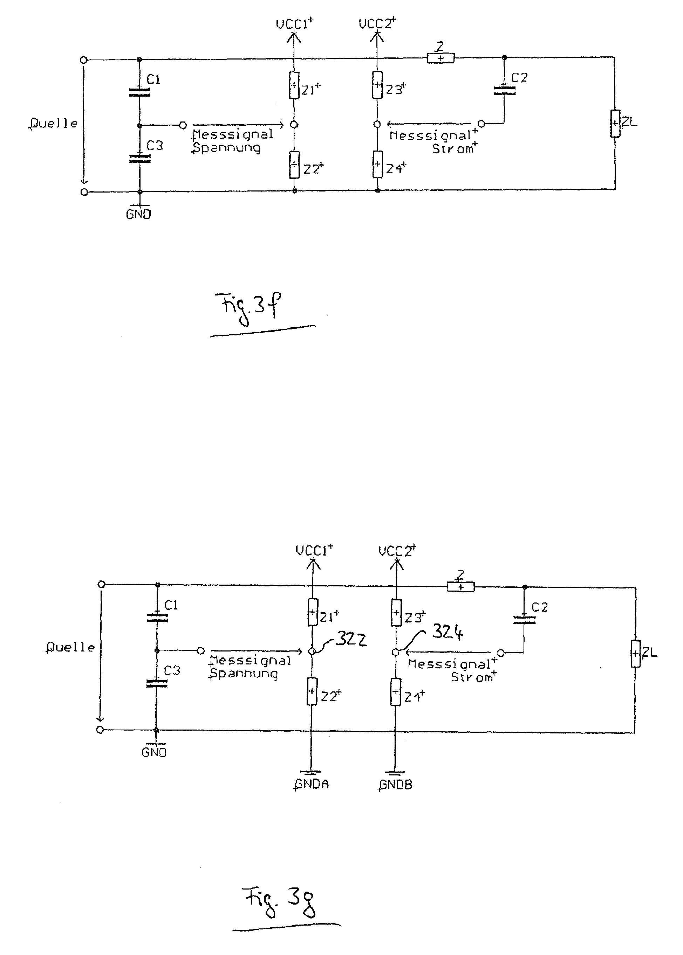

Fig. 3f zeigt eine sechste Schaltungsmöglichkeit, die sich von der dritten Schaltungsmöglichkeit (siehe Fig. 3c) wiederum lediglich dadurch unterscheidet, dass zwischen dem ersten Kondensator C1 und dem zweiten Kondensator C2 eine Impedanz Z ausgebildet ist. Alle weiteren Elemente des Ausführungsbeispiels der Fig. 3f entsprechen der dritten Schaltungsmöglichkeit (siehe Fig. 3c), sodass auch hier auf eine erneute Beschreibung der Elemente verzichtet werden kann.

Fig. 3g zeigt ein weiteres Ausführungsbeispiel, welches sich von dem in der Fig. 3f gezeigten Ausführungsbeispiel dadurch unterscheidet, dass die zweite Impedanz Z2 zwischen dem ersten Referenzpunkt 322 und einem ersten Vergleichspotential GNDA angeordnet ist. Ebenso ist die vierte Impedanz Z4 bei dem in der Fig. 3g gezeigten Ausführungsbeispiel zwischen dem zweiten Referenzpunkt 324 und einem zweiten Referenzpotential GNDB angeordnet. Das erste Referenzpotential GNDA und das zweite Referenzpotential GNDB können beispielsweise von dem Referenzpotential GND verschieden sein, wobei das zweite Referenzpotential GNDB gleich oder verschieden von dem ersten Referenzpotential GNDA sein kann. Alle weiteren Merkmale des Ausführungsbeispiels, wie es in der Fig. 3g gezeigt ist, entsprechen dem in der Fig. 3f bzw. dem in der Fig. 3c gezeigten Ausführungsbeispiel, sodass auch hier auf eine erneute Beschreibung verzichtet werden kann. Somit zeigt die siebte Schaltungsmöglichkeit der Fig. 3g die Nutzung unterschiedlicher Bezugspunkte für die beispielhafte Strom- und Spannungsmessung.

Die Last 150 weist eine Lastimpedanz ZL auf, die einen Ohmschen Anteil (Ohmscher Widerstand) als auch beispielsweise einen kapazitiven und/oder induktiven Anteil umfassen kann. Es kann sich auch lediglich um einen Ohmschen Widerstand handeln. Ebenso kann die Impedanz Z einen Ohmsche Widerstand und/oder einen kapazitiven und/oder einen induktiven Anteile aufweisen.

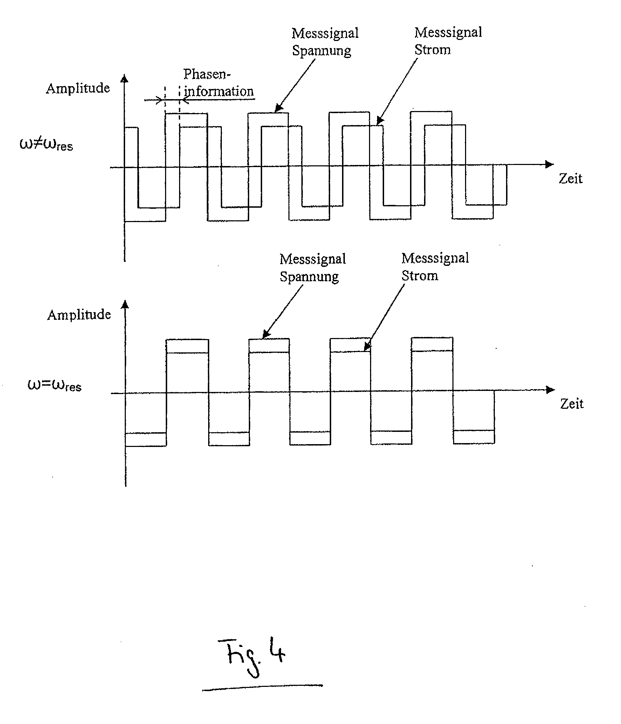

Fig. 4 zeigt einen möglichen Signalverlauf für das Spannungsmesssignal und das Strommesssignal, wobei ein zeitlicher Verlauf der Amplitude beider Messsignale dargestellt ist. Im oben gezeigten Fall liegt keine Resonanz vor (ω≠ω_{RES}) und im darunter dargestellten Fall liegt eine Resonanz vor (ω= ω_{RES}). Wie aus der Figur ersichtlich ist, ist im Resonanzfall sowohl das Spannungs- als auch das Stromsignal so ausgebildet, dass sie eine gleiche Frequenz aufweisen und keine relative Phasenverschiebung haben (laufen phasengleich). Wenn jedoch der Resonanzpunkt verlassen wird, kommt es zu einer Phasenverschiebung zwischen dem Spannungsmesssignal und dem Strommesssignal, was oben in der Fig. 4 dargestellt ist, wobei die gezeigte Phaseninformation die Phasenverschiebung zwischen dem Spannungsmesssignal und dem Strommesssignal wiedergibt. Umgekehrt führt die in der Fig. 4 gezeigte Phasenverschiebung zu einem Verlassen der Resonanzpunkte (Dissonanz). Bei dem in der Fig. 4 gezeigten Ausführungsbeispiel ist das Spannungsmesssignal amplitudenmäßig größer als das Strommesssignal, was jedoch lediglich der Darstellbarkeit dient und bei weiteren Ausführungsbeispielen anders sein kann. In der Fig. 4 sind ferner in idealisierter Form Rechteckimpulse dargestellt, wobei die Rechteckimpulse gleichermaßen auch harmonische Schwingungen in Form von Sinus- oder Cosinus-Schwingungen sein können.

Die Phasenverschiebung, wie sie in der Fig. 4 oben dargestellt ist, hat zur Folge, dass das Spannungsmesssignal dem Strommesssignal hinterher läuft und somit beispielsweise ein Piezo-Element (z.B. Piezo-Motor) nicht in der Resonanz arbeitet. Das hat zur Folge, dass zusätzliche Verluste auftreten, die die vorliegende Erfindung vermeiden möchte. Befindet sich das System nicht im Resonanzfall (ω≠ ω_{RES}), so entsteht eine Regelabweichung, die sich in Form der gezeigten Phaseninformation ausprägt. Auch die Signalform, die in der Fig. 4 idealisiert dargestellt ist, ändert sich je nach hardwaremäßiger Regelauslegung. Die Signalform kann sich im Regelbetrieb signifikant ändern, je nachdem, wie die elektrische Schaltung ausgelegt bzw. der Piezo-Motor mechanisch belastet wurde.

Im Resonanzfall (ω=ω_{RES}) befindet sich die zu treibende Last 150, also beispielsweise der Piezo-Motor sowie die Teile der Schaltungen der elektronischen Antriebsschaltung, in einem nahezu ideal resistiven Zustand (Strom und Spannungssignale weisen eine gleiche Phase auf― keine Phasenverschiebung). Dadurch ergeben sich Strommaxima sowie Spannungsminima, die sich mit Hilfe der kapazitiven Sensoren, wie sie die vorliegende Erfindung beschreibt, leicht erfassen lassen. Die Messsignale (beispielsweise Strom und Spannung) können als Regel- oder Stellgrößen in den geschlossenen Regelkreis einfließen. Die Effektivwerte dieser Signale werden vorwiegend bestimmt durch die Geometrie bzw. die Materialien der kapazitiven Sensoren (siehe auch Fig. 1 und 2).

Mit Hilfe der Sensoren, wie sie die vorliegende Erfindung definiert, ist es aber nicht nur möglich, eine optimale Betriebsfrequenz (Resonanz) zu suchen, sondern es ist auch eine relativ genaue Bestimmung der Signalverläufe von Strom und Spannung möglich, um dadurch eine entsprechend genaue Erfassung der Leistung zu erhalten. Dies bewirkt gleichzeitig eine Optimierung der Elektronik (Wirkungsgrad) sowie eine Optimierung der abgegebenen mechanischen Leistung an der Piezo-Spitze des beispielhaften dentalen Handstückes.

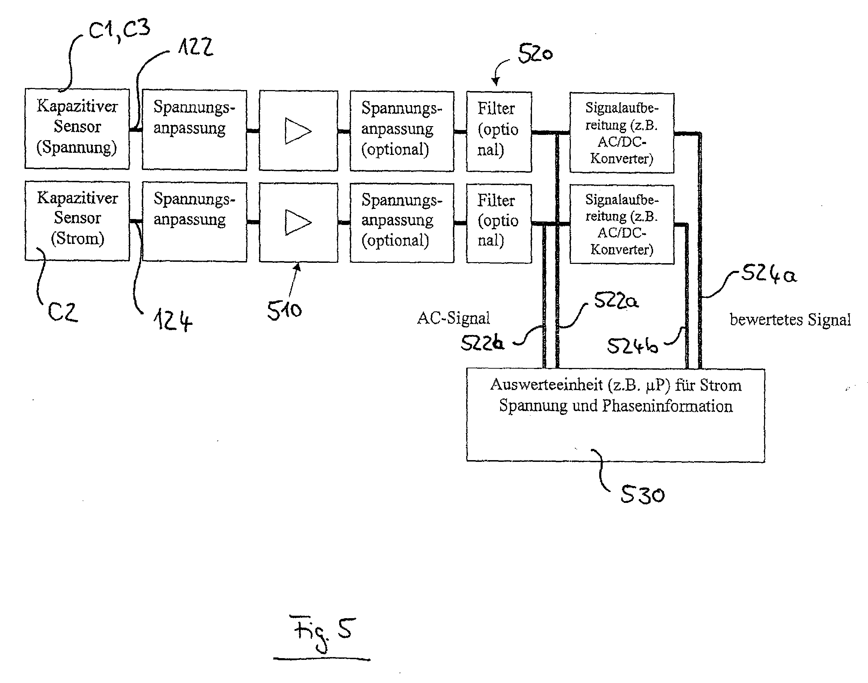

Fig. 5 zeigt beispielhaft eine mögliche Signalauswertung des ersten und zweiten Messsignals. In dem gezeigten Beispiel wird von dem ersten Messsignalausgang 122 kapazitiv ein Signal zur Spannungserfassung abgegriffen und von dem zweiten Messsignalausgang 124 kapazitiv ein Signal zur Stromerfassung abgegriffen. Nach der Erfassung beider Messsignale erfolgt eine Spannungsanpassung, die beispielsweise durch die in der Fig. 3 gezeigten ersten bis vierten Impedanzen Z1 bis Z4 erfolgen kann. Daran anschließend werden in dem Ausführungsbeispiel, wie es in der Fig. 5 gezeigt ist, beide Messsignale durch Messverstärker 510 verstärkt. Nach der Verstärkung kann optional eine weitere Spannungsanpassung vorgenommen werden und außerdem kann daran anschließend ein Filter 520 angeordnet sein, der beispielsweise einen Hochfrequenzfilter umfasst, um hochfrequente Störungen herauszufiltern. Alternative oder optional können auch Bandpassfilter oder Tieffilter ausgebildet sein, um störende Frequenzbereiche herauszufiltern. Die Ausgänge der beiden Filter 520 für die beiden Messsignale sind dann einerseits an eine Auswerteeinheit 530 gekoppelt und andererseits können die Signale an den Filterausgängen einer weiteren Signalaufbereitung zugeführt werden, die beispielsweise eine Konvertierung des Wechselspannungssignals in ein Gleichspannungssignal umfassen kann. Die Ausgänge der Signalaufbereitung können wiederum als bewertete Signale 524a, 524b der Auswerteeinheit 530 zugeführt werden. Somit erhält die Auswerteeinheit 530 für das erste Messsignal ein Wechselspannungssignal 522a und ein bewertetes Signal 524a. Außerdem erhält die Auswerteeinheit 530 von dem zweiten Messsignal wiederum ein Wechselspannungssignal 522b und ein weiteres bewertetes Messsignal 524b. Die Auswerteeinheit 530, die beispielsweise einen Mikroprozessor umfassen kann, ermittelt aus diesen Signalen das Stromsignal, das Spannungssignal und/oder den Phaseninformationen.

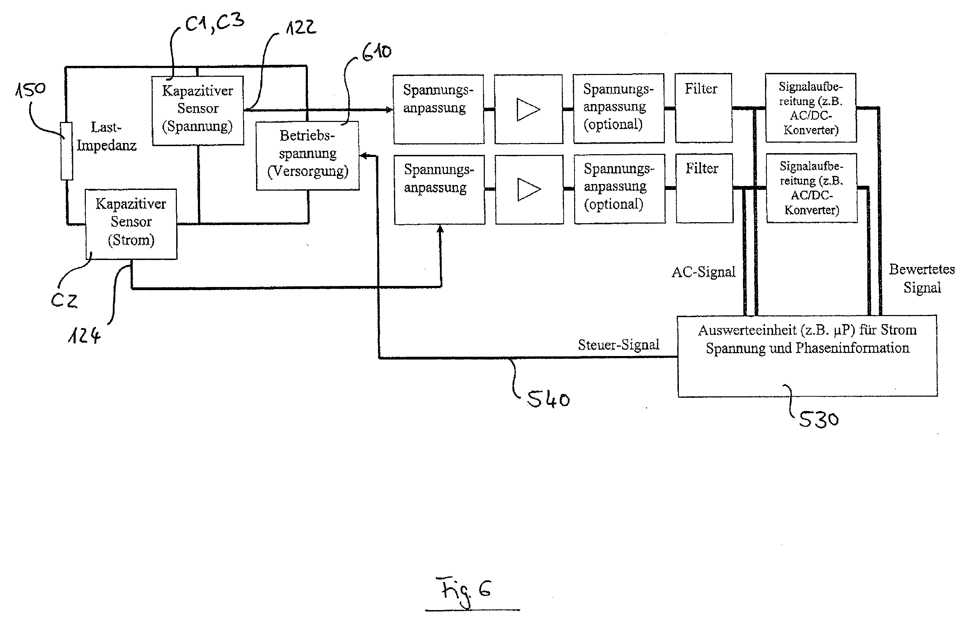

Fig. 6 zeigt ein Ausführungsbeispiel, bei dem die in der Fig. 5 gezeigte Signalverarbeitung benutzt wird, um durch die Auswerteeinheit 530 ein Steuersignal 540 zu erzeugen, welches wiederum einer Versorgungseinrichtung 610 zugeführt wird. Die Versorgungseinrichtung 610 kann beispielsweise die Betriebsspannung regeln und ansprechend auf das Steuersignal 540 den relativen Verlauf (Phasenverlauf) zwischen dem Spannungs- und dem Stromsignal ändern und/oder die Frequenz des Spannungs- und/oder Stromsignals ändern. Ferner zeigt das Ausführungsbeispiel aus der Fig. 6, dass ein erster kapazitiver Sensor, der beispielsweise die Kondensatoren C1 und C3 umfassen kann, den ersten Messsignalausgang 122 umfasst, um das Spannungssignal für die Signalverarbeitung bereitzustellen und dass ferner ein kapazitiver Sensor für den Strom den zweiten Kondensator C2 umfasst und über den zweiten Messsignalausgang 124 das Stromsignal der Signalaufbereitung zuführt.

Die Versorgungseinrichtung 610 stellt für die Last oder Lastimpedanz 150 das Strom- und Spannungssignal bereit, wobei das Steuersignal 540 beispielsweise derart durch die Auswerteeinheit bereitgestellt wird, dass die Lastimpedanz 150 einerseits möglichst in Resonanz arbeitet und andererseits der Wirkungsgrad (über die Steuerung der Leistungsaufnahme) optimiert wird. Somit ist in der Fig. 6 die Integration des kapazitiven Sensors und der Signalverarbeitung der Messsignale in einem Regel- bzw. Steuerkreis gezeigt, wobei die Lastimpedanz 150 bevorzugt als Piezo-Antrieb für einen Scaler ausgebildet ist.

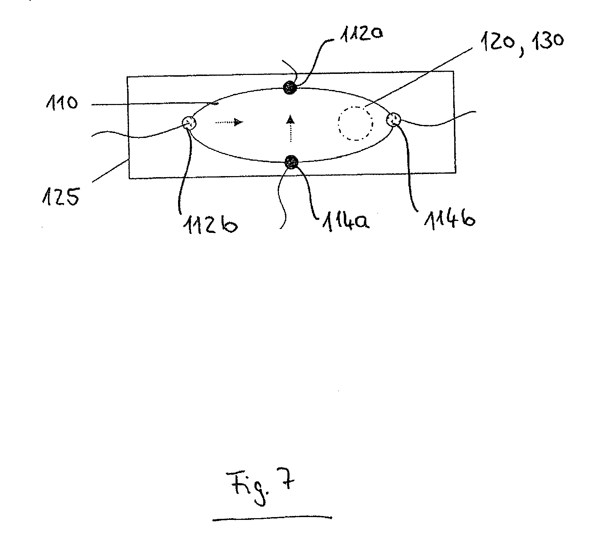

Fig. 7 zeigt ein weiteres Ausführungsbeispiel der vorliegenden Erfindung bei dem die Einspeisepunkte, d.h. der Strompfadeingang 112 und der Strompfadausgang 114 auf der ersten Kontaktelektrode 110 variiert werden. Im Detail ist eine Draufsicht auf die in der Fig. 1 gezeigte Schnittdarstellung zu sehen, wobei als Beispiel für unterschiedliche Geometrien im zweidimensionalen Raum eine horizontale und einer vertikale Einspeisung gezeigt ist. Die erste Kontaktelektrode 110 ist bei dem in der Fig. 7 dargestellten Ausführungsbeispiel als eine Ellipsenscheibe ausgebildet, die auf das erste Dielektrikum 125 abgeschieden wurde. Die ellipsenförmige erste Kontaktelektrode 110 weist eine Hauptachse und eine Nebenachse auf, wobei bei vertikaler Einspeisung die Einspeisung (im Wesentlichen) entlang der Nebenachse (112a, 114a) erfolgt, währenddessen bei horizontaler Einspeisung der Strompfadeingang 112b und der Strompfadausgang 114b (im Wesentlichen) entlang der Hauptachse ausgebildet sind. Die Einspeisungspunkte können dabei um ±20° um die Haupt- oder Nebenachse variieren oder können entlang verschiedener Achsen ausgebildet sein (z.B. Strompfadeingang 112 entlang der Hauptachse und der Strompfadausgang 114 entlang der Nebenachse).

In der Fig. 7 lediglich schematisch ist eine unterhalb des ersten Dielektrikums 125 angeordnete zweite oder dritte Kontaktelektrode 120, 130 gezeigt. Die Variation der Einspeisepunkte bewirkt, dass hohe Frequenzanteile im elektrischen Eingangssignal detektiert werden können, da bei sehr hohen Frequenzanteilen die Durchflutung der ersten Kontaktelektrode 110 mit Ladungsträgern verzögert verläuft und somit sich ein zeitlich veränderliches kapazitives Messsignal herausbildet. Damit ist es beispielsweise möglich, die medizinische Behandlungsvorrichtung dahingehend zu optimieren, dass das Eingangssignal möglichst harmonisch ist, indem störende hochfrequente Oberwellen erfasst (z.B. von transienten Signalen) und unterdrückt werden können. Beispielsweise kann dazu die erste Kontaktelektrode insgesamt vier Einspeisepunkte aufweisen, die entweder parallel oder abwechselnd genutzt werden, um so durch einen Vergleich der Einspeisung und Ausspeisung an verschiedenen Punkten hochfrequente Oberwellen festzustellen und ansprechend auf die festgestellten Oberwellen über die Auswerteeinheit 530 eine Rückkopplung auf die Versorgungseinrichtung 610 dahingehend zu bewirken, dass die hochfrequenten Oberwellen minimiert werden.

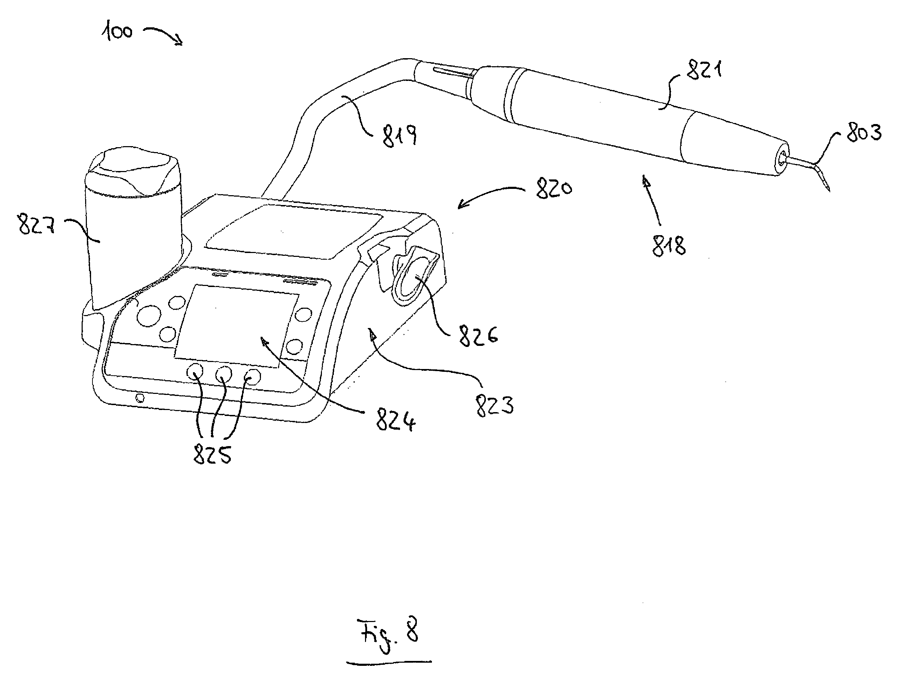

Fig. 8 zeigt die medizinische, insbesondere dentale, Behandlungsvorrichtung 100, die als Zahnsteinentferungs- oder Scaler-Behandlungsvorrichtung ausgebildet ist. Sie besteht beispielsweise aus einem Handgriffelement oder Handstück 818, einem Steuergerät 820 und einem Versorgungs- oder Verbindungsschlauch 819, der das Steuergerät 820 und das Handstück 818 verbindet.

Das gerade, längliche Handstück 818 weist eine zylindrische, hohle Außenhülse 821 auf, in der unter anderem eine Antriebseinheit für eine mit dem Handstück 818 verbindbarem Werkzeug 803 angeordnet ist. Das Steuergerät 820 weist ein Gehäuse 823 mit einer Anzeige 824 für feststehende oder einstellbare Betriebsparameter auf. Ferner sind mehrere Stellelemente 825, beispielsweise ein Drucktaster, zur Auswahl oder Änderung der Betriebsparameter und eine Handstückablage 826 und eine Flüssigkeitsquelle 827 mit einer Kühl- oder Spülflüssigkeit ausgebildet-

Der Versorgungs- oder Verbindungsschlauch 819 enthält beispielsweise mehrere Medien-oder Betriebsmittelleitungen, insbesondere elektrische Leitungen, die die Antriebseinheit mit entsprechenden Energiequellen verbinden.

Der kapazitive Sensor, wie er beispielsweise in der Fig. 1 gezeigt ist, kann im Handstück 818, dem Steuergerät 820 oder der Versorgungsleitung 819 angeordnet sein und damit die erfindungsgemäße medizinische Behandlungsvorrichtung bilden.

Ausführungsbeispiele der vorliegenden Erfindung umfassen somit einen kapazitiven Sensor zur getrennten oder kombinierten Erfassung von Strom und Spannung und können wie folgt zusamengefasst werden. Es wird beispielsweise das Prinzip eines Plattenkondensators, der zwei- oder dreidimensional realisiert werden kann und beispielsweise ein PCB (PCB = Printed Circuit Board) umfasst, ausgenutzt, um kapazitiv zwei der Strom- und Spannungsgrößen zu erfassen. Als Materialien kommen beispielsweise Materialien mit Materialkennung FR4, keramische Basisträger mit aufgedruckten isolierenden und leitfähigen Strukturen, Folienstrukturen oder auch koaxiale Anordnungen in Betracht. Ein besonderes Merkmal von kapazitiven Sensoren, wie sie in Ausführungsbeispielen der vorliegenden Erfindung benutzt werden, ist dass diese Sensoren eine einfache, störsichere und kostengünstige Integration in bereits vorhandenen Komponenten erlauben. Beispielsweise können sie als Elektronikprints (zweidimensionale Strukturen) oder in Leitungen zum Anwendungsteil wie beispielsweise einem Kabel (dreidimensionale Struktur) untergebracht werden. Ein weiteres Merkmal dieser Sensoren ist deren flexible Anpassungsmöglichkeit an die jeweilige Messaufgabe durch eine Wahl der Geometrie der Strukturen (z.B. Flächenabmessungen oder auch Schichtungen). Ferner kann in Abhängigkeit von Einspeise- und Auskopplungspunkten sowie von Abnahmepunkten die Ladungsdichteverteilung im stationären Fall, aber auch eine Änderung dieser Ladungsdichteverteilung im dynamischen Fall ermittelt werden. Ausführungsbeispiele erlauben somit eine Kombination von Strom- und Spannungsmessungen in einem Sensor (einer mehrschichtigen Struktur) oder auch eine getrennte Messung von Strom und Spannung durch Aufbau und geeigneter Wahl von Einspeisepunkten, Ausspeisepunkten sowie Abnahmepunkte für die Messgrößen. Als Messgrößen sind beispielsweise die Amplitude, Phase und der Signalverlauf des Spannungs- als auch des Stromsignals möglich. Ebenso ist es möglich, durch das Material der elektrisch leitenden und isolierenden Strukturen eine Anpassung an die Messaufgabe beispielsweise durch eine Führung der elektrischen Feldlinien zu erreichen. Dies ist unter Anderem für die Baugröße der Anordnung relevant als auch für die Störsicherheit (z.B. Vernichtung von Störkapazitäten). Ferner ist es möglich eine passive oder auch aktive Abschirmung zu erreichen.

## Patentansprüche

1. Medizinische Behandlungsvorrichtung (100) mit einem Sensor zum Erfassen von Betriebszuständen, der folgendes umfasst:
eine erste Kontaktelektrode (110), die zwischen einem Strompfadeingang (112) und einem Strompfadausgang (114) angeordnet ist, wobei ein elektrisches Eingangssignal zur Versorgung der medizinischen Behandlungsvorrichtung an dem Strompfadeingang (112) anlegbar ist und eine Last (150) der medizinischen Behandlwigsvorrichtung (100) an dem Strompfadausgang (114) anlegbar ist;
eine zweite Kontaktelektrode (120), die von der ersten Kontaktelektrode (110) durch ein erstes Dielektrikum (125) getrennt ist und einen ersten Messsignalausgang (122) zum Abgreifen eines ersten kapazitiven Messsignals aufweist;
eine dritte Kontaktelektrode (130), die von der ersten Kontaktelektrode (110) durch ein zweites Dielektrikum (135) getrennt ist und einen zweiten Messsignalausgang (124) zum Abgreifen eines zweiten kapazitiven Messsignals aufweist,
**gekennzeichnet durch**
eine vierte Kontaktelektrode (140), die von der zweiten Kontaktelektrode (120) **durch** ein drittes Dielektrikum (145) getrennt ist und einen Referenzanschluss (144) zur Kopplung an ein Massepotential aufweist.

2. Behandlungsvorrichtung (100) nach Anspruch 1, die ferner umfasst:
eine Auswerteeinheit (530), die ausgebildet ist, um das erste und zweite kapazitive Messsignal zu erfassen und darauf basierend ein Stromsignal und/oder ein Spannungssignal und/oder ihre relative Phasenbeziehung und/oder eine Frequenz für das elektrische Eingangssignal zu ermitteln.

3. Behandlungsvorrichtung (100) nach Anspruch 2, wobei die Auswerteeinheit (530) ausgebildet ist, um ein Steuersignal (540) basierend auf dem ermittelten Stromsignal und/oder dem Spannungssignal und/oder der Frequenz und/oder der Phase zu erzeugen und für eine Versorgungseinrichtung (610), die das elektrische Eingangssignal erzeugt, bereitzustellen, wobei das Steuersignal (540) ausgebildet ist, um die Versorgungseinrichtung (610) zu einer Änderung des elektrischen Eingangssignals zu veranlassen.

4. Behandlungsvorrichtung (100) nach Anspruch 3, wobei das Steuersignal (540) ausgebildet ist, um die relative Phasenverschiebung zwischen dem Stromsignal und dem Spannungssignal zu ändern.

5. Behandlungsvorrichtung (100) nach Anspruch 3 oder Anspruch 4, wobei die Auswerteeinheit (530) ausgebildet ist, um über das Steuersignal (540) die relative Phasenverschiebung zu eliminieren, um einen resonanten Betrieb der Behandlungsvorrichtung (100) herzustellen.

6. Behandlungsvorrichtung (100) nach Anspruch 3 oder Anspruch 4, wobei die Auswerteeinheit (530) ausgebildet ist, um aus dem ersten und zweiten kapazitiven Messsignal eine Leistungsaufnahme der Last (150) zu ermitteln und das Steuersignal (540) derart zu ändern, um eine Änderung der Amplitude des Stromsignals und/oder des Spannungssignals zu bewirken, so dass sich die Leistungsaufnahme der Last (150) ändert.

7. Behandlungsvorrichtung (100) nach einem der vorhergehenden Ansprüche, wobei das erste und zweite kapazitive Messsignal sich auf ein erstes und zweites Referenzpotential beziehen.

8. Behandlungsvorrichtung (100) nach einem der vorhergehenden Ansprüche, wobei das erste Dielektrikum (125) und das zweite Dielektrikum (135) eine gemeinsame dielektrische Schicht bilden, auf deren einen Seite die erste Kontaktelektrode (110) angeordnet ist und auf deren gegenüberliegenden Seite lateral zueinander versetzt die zweite Kontaktelektrode (120) und die dritte Kontaktelektrode (130) ausgebildet sind.

9. Behandlungsvorrichtung (100) nach Anspruch 8, die ferner ein viertes Dielektrikum (137) und ein fünftes Dielektrikum (155) aufweist, wobei das vierte Dielektrikum (137) die zweite Kontaktelektrode (120) und die dazu lateral versetzte dritte Kontaktelektrode (130) lateral durch einem Bereich (D) voneinander trennt, und wobei das fünfte Dielektrikum (155) auf einer der dritten Kontaktelektrode (130) gegenüberliegenden Seite des dritten Dielektrikums (145) angeordnet ist, wobei das vierte oder fünfte Dielektrikum (137, 155) ausgebildet sind, um Störkapazitäten zu unterdrücken.

10. Behandlungsvorrichtung (100) nach einem der vorhergehenden Ansprüche, wobei die erste Kontaktelektrode (110) einen ersten Teil (110a) und einen zweiten Teil (110b) aufweist, wobei eine Impedanz (Z) ausgebildet ist, um den ersten Teil (110a) mit den zweiten Teil (110b) elektrisch miteinander zu verbinden.

11. Behandlungsvorrichtung (100) nach einem der vorhergehenden Ansprüche, die ferner umfasst:
ein Handstück (818) mit Piezo-Motor oder ein Steuergerät (820) für das Handstück (818) mit Piezo-Motor oder eine Versorgungsleitung (819) des Handstücks (818) mit Piezo-Motor.

12. Verfahren zur Regelung einer Last (150) einer medizinischen Behandlungsvorrichtung (100) nach einem der Ansprüche 1 bis 11, mit folgenden Schritten:
Erfassen des ersten kapazitiven Messsignals;
Erfassen des zweiten kapazitiven Messsignals;
Ermitteln eines Steuersignals (540) basierend auf dem ersten kapazitiven Messsignal und dem zweiten kapazitiven Messsignal; und
Bereitstellen des Steuersignals (540) einer Versorgungseinheit (610) derart, dass das Steuersignal (540) das elektrische Eingangssignal ändert.

13. Verfahren nach Anspruch 12, wobei das elektrische Eingangssignal ein Stromsignal und/oder ein Spannungssignal umfasst, und wobei das Steuersignal (540) derart bereitgestellt wird, dass eine Phasenverschiebung zwischen dem Stromsignal und dem Spannungssignal verringert wird, um einen resonanten Betrieb der Last (150) herzustellen.

14. Verfahren nach Anspruch 12 oder Anspruch 13, wobei das Steuersignal (540) ausgebildet ist, um eine Änderung der Amplitude des Stromsignals und/oder des Spannungssignals und/oder der Frequenz zu bewirken, so dass die Wirkleistung der Last (150) geändert wird.

15. Verfahren nach einem der Ansprüche 12 bis 14, weiter umfassend: Ausbilden einer Impedanz (Z) zwischen dem ersten Kondensator (C1), der von der ersten Kontaktelektrode (110), der zweiten Kontaktelektrode (120) und der ersten dielektrischen Schicht (125) gebildet wird, und dem zweiten Kondensator (C2), der von der ersten Kontaktelektrode (110), der dritten Kontaktelektrode (130) und der zweiten dielektrischen Schicht (135) gebildet wird wobei die Impedanz (Z) gewählt wird, um das Eingangssignal zu ändern.

## Claims

1. A medical treatment apparatus (100) having a sensor for detecting operating modes, that comprises:
a first contact electrode (110) that is arranged between a current path input (112) and a current path output (114), wherein an electric input signal can be applied to the current path input (112) for supplying the medicinal treatment apparatus and wherein a load (150) of the medicinal treatment apparatus (100) can be applied to the current path output (114);
a second contact electrode (120) that is separate from the first contact electrode (110) by a first dielectric (125) and exhibits a first measurement signal output (122) for tapping a first capacitive measurement signal;
a third contact electrode (130) that is separate from the first contact electrode (110) by a second dielectric (135) and exhibits a second measurement signal output (124) for tapping a second capacitive measurement signal,
**characterized by**
a fourth contact electrode (140) that is separate from the second contact electrode (120) by a third dielectric (145) and exhibits a reference terminal (144) for coupling to a mass potential.

2. The treatment apparatus (100) according to claim 1, that furthermore comprises:
an evaluation unit (530) that is designed to detect the first and second capacitive measurement signals and based on this to determine a current signal and/or a voltage signal and/or their relative phase relation and/or a frequency for the electric input signal.

3. The treatment apparatus (100) according to Claim 2, the evaluation unit (530) being designed to generate a control signal (540) based on the determined current signal and/or the voltage signal and/or the frequency and/or the phase and to provide it for a supply device (610) that generates the electric input signal, the control signal (540) being designed to make the supply unit (610) change the electric input signal.

4. The treatment apparatus (100) according to Claim 3, the control signal (540) being designed to change the relative phase shift between the current signal and the voltage signal.

5. The treatment apparatus (100) according to Claim 3 or 4, the evaluation unit (530) being designed to eliminate the relative phase shift via the control signal (540) so as to produce a resonant operation of the treatment apparatus (100).

6. The treatment apparatus (100) according to claim 3 or claim 4, the evaluation unit (530) being designed to determine a power consumption of the load (150) from the first and second capacitive measurement signal and to change the control signal (540) to effect a change in the amplitude of the current signal and/or of the voltage signal so that the power consumption of the load (150) changes.

7. The treatment apparatus (100) according to one of the preceding claims, the first and second capacitive measurement signal referring to a first and second reference potential.

8. The treatment apparatus (100) according to one of the preceding claims, the first dielectric (125) and the second dielectric (135) forming a joint dielectric layer on whose one side the first contact electrode (110) is arranged and on whose opposite side, laterally offset to each other, the second contact electrode (120) and the third contact electrode (130) are formed.

9. The treatment apparatus (100) according to Claim 8, that further exhibits a fourth dielectric (137) and a fifth dielectric (155), the fourth dielectric (137) separating the second contact electrode (120) and the third contact electrode (130), offset laterally thereto, laterally by an area (D) from each other, and the fifth dielectric (155) being arranged on a side of the third dielectric (145) opposite the third contact electrode (130), the fourth or fifth dielectric (137, 155) being designed to suppress stray capacitances.

10. The treatment apparatus (100) according to one of the preceding claims, the first contact electrode (110) exhibiting a first part (110a) and a second part (110b), an impedance (Z) being formed for electrically connecting the first part (110a) to the second part (110b) to each other.

11. The treatment apparatus (110) according to one of the preceding claims, that further comprises:
a hand piece (818) having a piezo motor or a control device (820) for the hand piece (818) with a piezo motor or a supply line (819) of the hand piece (818) with the piezo motor.

12. A method for regulating a load (150) of a medicinal treatment apparatus (100) according to one of Claims 1 to 11, having the following steps:
detecting the first capacitive measurement signal;
detecting the second capacitive measurement signal;
determining a control signal (540) based on the first capacitive measurement signal and the second capacitive measurement signal; and
providing the control signal (540) to a supply unit (610) such that the control signal (540) changes the electric input signal.

13. The method according to Claim 12, the electric input signal comprising a current signal and/or a voltage signal and the control signal (540) being provided such that a phase shift between the current signal and the voltage signal is reduced to provide a resonant operation of the load (150).

14. The method according to Claim 12 or 13, the control signal (540) been designed to effect a change in the amplitude of the current signal and/or the voltage signal and/or the frequency, so that the effective power of the load (150) is changed.

15. The method according to one of Claims 12 to 14, further comprising: forming an impedance (Z) between the first capacitor or (C1) that is formed by the first contact electrode (110), the second contact electrode (120) and the first dielectric layer (125), and the second capacitor (C2) that is formed by the first contact electrode (110), the third contact electrode (130) and the second dielectric layer (135), the impedance (Z) being selected such that the input signal is changed.

## Revendications

1. Dispositif de traitement médical (100) muni d'un capteur destiné à détecter les états de fonctionnement, lequel comporte les éléments suivants :
- une première électrode de contact (110) disposée entre une entrée de voie du courant (112) et une sortie de voie du courant (114), un signal d'entrée électrique, destiné à alimenter le dispositif de traitement médical, pouvant être appliqué à l'entrée de voie du courant (112) et une charge (150) du dispositif de traitement médical (100) pouvant être appliquée à la sortie de voie du courant (114) ;
- une deuxième électrode de contact (120), qui est séparée de la première électrode de contact (110) par un premier diélectrique (125) et comporte une première sortie de signal de mesure (122) destinée à prélever un premier signal de mesure capacitif ;
- une troisième électrode de contact (130), qui est séparée de la première électrode de contact (110) par un deuxième diélectrique (135) et comporte une deuxième sortie de signal de mesure (124) destinée à prélever un deuxième signal de mesure capacitif ;
**caractérisé par**
- une quatrième électrode de contact (140), qui est séparée de la deuxième électrode de contact (120) par un troisième diélectrique (145) et comporte un raccord de référence (144) pour le couplage à un potentiel de masse.

2. Dispositif de traitement (100) selon la revendication 1, qui comporte également :
une unité d'analyse (530) qui est conçue pour détecter le premier et le deuxième signal de mesure capacitif et pour calculer, en se basant sur ceux-ci, un signal de courant et/ou un signal de tension et/ou leur rapport de phase relatif et/ou une fréquence pour le signal d'entrée électrique.

3. Dispositif de traitement (100) selon la revendication 2, dans lequel l'unité d'analyse (530) est conçue pour générer un signal de commande (540) sur la base du signal de courant calculé et/ou du signal de tension et/ou de la fréquence et/ou de la phase et pour les mettre à la disposition d'un dispositif d'alimentation (610), qui génère le signal d'entrée électrique, ledit signal de commande (540) étant configuré pour inciter le dispositif d'alimentation (610) à modifier le signal d'entrée électrique.

4. Dispositif de traitement (100) selon la revendication 3, dans lequel le signal de commande (540) est configuré pour modifier le décalage de phase relatif entre le signal de courant et le signal de tension.

5. Dispositif de traitement (100) selon la revendication 3 ou la revendication 4, dans lequel l'unité d'analyse (530) est conçue pour éliminer, par l'intermédiaire du signal de commande (540), le décalage de phase relatif, afin d'établir un fonctionnement résonant du dispositif de traitement médical (100).

6. Dispositif de traitement (100) selon la revendication 3 ou la revendication 4, dans lequel l'unité d'analyse (530) est conçue pour calculer une puissance absorbée de la charge (150) à partir du premier et du deuxième signal de mesure capacitif, et pour modifier le signal de commande (540) afin d'induire une modification de l'amplitude du signal de courant et/ou du signal de tension, de manière à faire varier la puissance absorbée de la charge (150).

7. Dispositif de traitement (100) selon l'une quelconque des revendications précédentes, dans lequel le premier et le deuxième signal de mesure capacitif se rapportent à un premier et à un deuxième potentiel de référence.

8. Dispositif de traitement (100) selon l'une quelconque des revendications précédentes, dans lequel le premier diélectrique (125) et le deuxième diélectrique (135) forment une couche diélectrique commune, sur l'une des faces de laquelle est agencée la première électrode de contact (110) et sur la face opposée de laquelle sont réalisées la deuxième électrode de contact (120) et la troisième électrode de contact (130) décalées latéralement l'une par rapport à l'autre.

9. Dispositif de traitement (100) selon la revendication 8, qui comporte en outre un quatrième diélectrique (137) et un cinquième diélectrique (155), le quatrième diélectrique (137) séparant latéralement l'une de l'autre, par l'intermédiaire d'une zone (D), la deuxième électrode de contact (120) et la troisième électrode de contact (130) décalée latéralement à celle-ci, et le cinquième diélectrique (155) étant agencé sur une face du troisième diélectrique (145), située en regard de la troisième électrode de contact (130), le quatrième ou le cinquième diélectrique (137, 155) étant conçus pour supprimer les capacités perturbatrices.

10. Dispositif de traitement (100) selon l'une quelconque des revendications précédentes, dans lequel la première électrode de contact (110) comporte une première partie (110a) et une deuxième partie (110b), une impédance (Z) étant réalisée pour relier électriquement l'une à l'autre la première partie (110a) et la deuxième partie (110b).

11. Dispositif de traitement (100) selon l'une quelconque des revendications précédentes, qui comporte en outre :
une pièce à main (818) à moteur piézoélectrique ou un appareil de commande (820) pour une pièce à main (818) à moteur piézoélectrique ou un câble d'alimentation (819) de la pièce à main (818) à moteur piézoélectrique.

12. Procédé destiné à régler une charge (150) d'un dispositif de traitement médical (100), selon l'une quelconque des revendications 1 à 11, comportant les étapes suivantes :
- détection du premier signal de mesure capacitif ;
- détection du deuxième signal de mesure capacitif ;
- calcul d'un signal de commande (540) basé sur le premier signal de mesure capacitif et le deuxième signal de mesure capacitif ; et
- mise à disposition du signal de commande (540) à une unité d'alimentation (610) de telle sorte que le signal de commande (540) modifie le signal d'entrée électrique.

13. Procédé selon la revendication 12, dans lequel le signal d'entrée électrique comporte un signal de courant et/ou un signal de tension, et dans lequel le signal de commande (540) est mis à disposition de manière à diminuer un décalage de phase entre le signal de courant et le signal de tension, afin d'établir un fonctionnement résonant de la charge (150).

14. Procédé selon la revendication 12 ou la revendication 13, dans lequel le signal de commande (540) est configuré pour induire une modification de l'amplitude du signal de courant et/ou du signal de tension et/ou de la fréquence, de manière à modifier la puissance active de la charge (150).

15. Procédé selon l'une quelconque des revendications 12 à 14, comportant en outre : la réalisation d'une impédance (Z) entre le premier condensateur (C1), qui est formé par la première électrode de contact (110), la deuxième électrode de contact (120) et la première couche diélectrique (125), et le deuxième condensateur (C2), qui est formé par la première électrode de contact (110), la troisième électrode de contact (130) et la deuxième couche diélectrique (135), l'impédance (Z) étant choisie pour modifier le signal d'entrée électrique.
